# EUROPEAN PATENT APPLICATION

(11) **EP 4 589 794 A1**
(43) Date of publication of application: **23.07.2025**
(21) Application number: 25152951.7
(22) Date of filing: 20.01.2025
(51) Int. Cl.: H02G 3/14, E05D 11/06, E05D 11/10, H01R 13/447, H01R 13/52, E05F 1/12

(54) **COVER STRUCTURE**

(30) Priority: 19.01.2024 IT 202400000945
(71) Applicant: Vimar S.p.A., 36063 Marostica (VI) (IT)
(72) Inventor: BERTOLLO, Michele, 36060 Pianezze (VI) (IT); SALBEGO, Emanuele, 36064 Colceresa (VI) (IT)
(74) Representative: Locas, Davide

(57) **Abstract**

A cover structure comprises a support frame for electric modules, a cover which is hinged to the support frame, a resilient element comprising a first abutment portion and a second abutment portion and a deformable portion. The abutment portions abut the support frame and the cover, respectively, in correspondence of respective seats. The abutment portions together with the seats define respective contact points of the resilient element on the support frame and on the cover. The cover is rotatable between a closed position and an open position by passing through an intermediate position in which the contact points and the hinging axis are aligned and the contact points are at a distance from each other less than the distance of the closed position and the open position.

## Description

The present invention relates to a cover structure of the type comprising a support frame for electric modules and a cover which is hinged to the frame.

In the relevant technical sector with respect to civil and industrial electrical plants, there may be perceived the need to provide systems for protection from external agents for the electric modules used in the plant.

For example, when electric modules, such as switches, push-buttons, sockets, etc., are used in external environments or are generally exposed to dust and dirt, there may be used a cover which is arranged so as to cover the electric modules and which can be opened if it becomes necessary to physically reach them.

Some known solutions provide for the use of suitable frames which can be applied to the supports on which the electric modules are mounted and to which the cover is rotatably connected, thereby allowing the movement described above.

In order to normally keep the cover in the closed position, torsion springs or other resilient elements are used.

Examples of such solutions are described in DE 20 2012 100 856 U1, US 2005/0109529 A1, DE 20 2006 004 740 U1, DE20011410U1, DE4214031C2 or FR2724065B1.

In some situations, however, it may be desirable to provide a system which is capable of keeping the cover in an open position, making the electric module more readily accessible, for example, in order to actuate a switch or to insert a plug in a socket.

Some solutions provide for using resilient elements capable of keeping the cover in the open position, such as, for example, the international patent application WO 2012/171733 A1. However, this solution is suitable only for structures with very specific features and cannot be used in the electrical installations typically used.

Therefore, there is perceived the need to have available cover structures which are provided with two different stable positions: a first closed position for covering the electric modules and an open position, in which they can be reached without particular difficulty by a user.

The technical problem addressed by the present invention is therefore to provide a cover structure which is structurally and functionally configured to at least partially overcome one or more of the disadvantages set out with reference to the cited prior art.

In the context of this problem, an object of the present invention is to provide a cover structure in which the cover is kept stable both in the closed position and in the open position.

Another object of the present invention is to provide a cover structure which has a simple structure which is particularly reliable.

An object of the present invention is also to provide a cover structure which has a relatively compact structure which is suitable for being associated with the supports for electrical installations which are typically used in the field.

Another object of the present invention is to provide a box and an installation group which allow the installation solutions known to be improved in the context of a rational solution with a relatively contained cost.

This problem is solved and at least one of these objects is at least partially achieved by the invention in a first aspect thereof by means of a cover structure comprising a support frame and a cover which is hinged to the support frame about a hinging axis so as to be able to rotate between a closed position and an open position.

Preferably, the cover structure comprises a resilient element.

Preferably, the resilient element includes a first abutment portion, a second abutment portion and a deformable portion which extends between the abutment portions.

Preferably, the abutment portions abut the support frame and the cover, respectively, in correspondence of respective seats.

Preferably, the first abutment portion is secured to the support frame and the second abutment portion is secured to the cover.

Preferably, the support frame and the cover comprise respective seats. Preferably, the seats are configured to secure the first abutment portion and the second abutment portion, respectively.

Preferably, the deformable portion, when the resilient element is in a neutral condition, is substantially C-shaped. Preferably, the abutment portions extend transversely to the deformable portion with respect to a position plane of the "C". Preferably, the abutment portions are defined by two substantially parallel portions, the parallel portions preferably being substantially parallel with the hinging axis.

The abutment portions together with the seats define, in a respective plane perpendicular to the hinging axis, preferably passing through the respective seat to which each abutment portion is secured, respective contact points of the resilient element on the support frame and on the cover.

Preferably, the contact points are arranged at respective non-zero distances from the hinging axis. Preferably, the distances are defined in the plane perpendicular to the hinging axis.

Preferably, the cover is rotatable between the closed position and the open position by passing through an intermediate position in which the contact points and the hinging axis are aligned and the contact points are at a distance from each other less than a corresponding distance in the closed position and the open position.

Preferably, the resilient element is secured to the cover so that the deformable portion is urged by means of flexion, varying the curvature of the "C" while the cover is moved between the opening position and the closed position. Preferably, the "C" becomes deformed into a more closed configuration when the cover moves from the closed position to the intermediate position. Preferably, the "C" becomes deformed into a configuration which is open again when the cover passes the intermediate position and moves towards the open position.

It will be appreciated that the cover structure is kept stable both in the closed position and in the open position.

The resilient element urges the cover so as to close when it is arranged in an angular position between the closure position and the intermediate position while, once the intermediate position is passed, it urges the cover so as to open.

In fact, as a result of the aligned position between the contact points and the rotation axis and the respective position of these points in the two closed and open positions, the force generated by the resilient element is in the opposite direction when the cover is arranged at an angular position between the closure position and the intermediate position, with respect to when it is arranged in an angular position between the intermediate position and the open position.

This solution is further carried out with a particularly compact and simple structure by using the resilient element which is produced by means of the C-shaped portion and the two parallel portions.

The present invention may further have at least one of the additional preferred features set out below.

Preferably, the deformable portion has a curved shape and preferably extends over a total extent between the contact points, the total extent being greater than the distance between the contact points in the intermediate position and in the open and closed positions.

Preferably, the distance between the contact points is less than the total extent in each position of the cover between the closed position and the open position.

As a result of these features, it is possible to urge the resilient element by flexion, varying the curvature of the resilient element while it is being moved between the open position and the closed position.

Preferably, there is defined a reference plane which passes through the contact point between the resilient element and the frame and which is parallel with the hinging axis, the contact point between the resilient element and the cover when the cover is arranged in an open position being arranged at an opposite side with respect to the reference plane with respect to when the cover is arranged in a closed position.

In this manner, the resultant of the forces which act on the cover following the action of the resilient element has an opposite direction in the open and closed positions of the cover, thereby making the two positions stable with a particularly simple solution from a construction point of view.

Preferably, the deformable portion, when the resilient element is in a neutral condition, is substantially C-shaped.

Preferably, the resilient element includes two substantially parallel portions which define the abutment portions which extend transversely, and preferably substantially perpendicularly, relative to the deformable portion with respect to a position plane of the "C".

In this manner, the resilient element may be constructed simply and can be connected in a stable manner to the frame and cover.

Preferably, the cover and the support frame are made from plastics material, the resilient element being made from metal material, preferably harmonic steel.

Preferably, the resilient material is filiform.

These features also contribute to allowing the production of the cover structure with a constructively simple and economical solution.

The frame comprises a bracket which preferably supports a rotation fulcrum of the cover. Preferably, the bracket comprises a groove inside which there is partially received the second abutment portion of the cover when the cover is in an open position so as to act counter to a further opening rotation of the cover. Preferably, the bracket develops in a direction away from the frame.

As a result of these features, the open position of the cover is found to be particularly stable, avoiding any risks of accidental damage when the cover structure is open.

Preferably, the abutment portion of the resilient element on the cover is secured to the cover by means of a form-fitting connection, preferably by means of a hole.

Preferably, the bracket is L-shaped, the groove being between the two portions of the "L". The groove is preferably of rounded shape.

This solution allows a limitation of the opening of the cover to angles which are also significantly less than 180° with a solution which is particularly resistant and simple. In addition, this feature also allows fixing of the resilient element to be obtained in a simple manner with a solution which can be obtained by moulding, therefore without affecting the production costs with respect to the known solutions.

Preferably, the frame has a mount-like shape and comprises a peripheral wall which develops about a through-opening which is defined by the mount, the peripheral recess extending in a position adjacent to the peripheral wall.

The peripheral wall preferably comprises a notch which defines an interruption in the peripheral wall, the notch being configured so that the deformable portion is partially received in the notch at least in the open position of the cover.

It is thereby possible to provide for the presence of the resilient element although there is used a frame with dimensions comparable with those of the known solutions used for constructing electrical plants.

Preferably, the bracket develops from the peripheral wall.

This solution also advantageously contributes to the compactness of the structure.

In the present description and in the appended claims, a number of terms and expressions are considered to have, unless otherwise explicitly indicated, the meaning expressed in the following definitions.

The expression "electric module" or "module for electrical plant" is intended to be understood to be any module which can be used in a domestic, commercial or industrial electrical plant which is intended to control and generally operate the components present in the plant.

These modules may comprise by way of non-limiting example sockets, switches of various types, sensors, control devices, such as thermostats, or signalling devices, such as ringers, buzzers.

This definition also includes ornamental elements which are typically formed by dummy push-buttons with a covering function, for example, where other units of different types are not present.

The expressions "substantially parallel" and "substantially perpendicular" with reference to two directions, axes, planes or components, in the context of the present invention, are intended to indicate a possible deviation of ±10°, preferably ±5°, with respect to complete parallelism and complete perpendicularity between the two directions, axes, planes or components, respectively.

The expression "substantially rectangular" is intended to be understood so that a component or element has a shape which resembles the shape of a rectangle but may have rounded angles or may deviate from complete parallelism of the sides.

The features and advantages of the present invention will be better appreciated from the detailed description of preferred embodiments thereof which are illustrated by way of non-limiting example with reference to the appended drawings, in which:
- Figures 1A and 1B are two perspective views of the cover structure of the present invention in a closed configuration and in an open configuration, respectively;
- Figures 2A, 2B, 2C are two detailed views, in accordance with a cross-section, of the cover structure of the present invention with the cover arranged in a closed position, in an intermediate position and in an open position, respectively;
- Figure 3 is a detailed perspective view of a support frame and a resilient element, details of the cover structure according to the present invention;
- Figure 4 is a front view of the cover structure of the present invention;
- Figure 5 is a detailed perspective view, in accordance with a cross-section, of the cover structure according to the present invention;
- Figure 6A is a perspective detailed view, in accordance with another cross-section, of the cover structure according to the present invention; and
- Figure 6B is a perspective detailed view, in accordance with still another cross-section, of the cover structure according to the present invention, wherein the resilient element has been removed for greater clarity of the illustration.

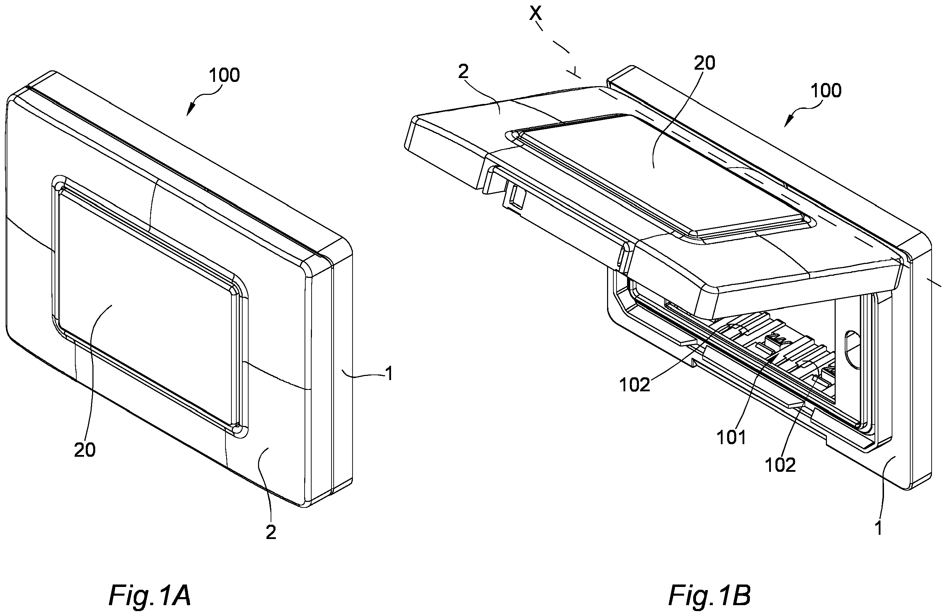

Initially with reference to Figure 1, a cover structure according to the present invention is generally designated 100.

The cover structure 100 comprises a support frame 1 which is configured to support, directly or indirectly, one or more electric modules and a cover 2.

In some embodiments, the support frame 1 is in the form of a mount.

There is thereby defined a through-opening 101 which allows the electric module(s) to be reached and where applicable installed.

In particular, the support frame 1 may be provided with engaging elements 102, by means of which the electric modules can be fixed to the frame.

Alternatively, the support frame 1 may be combined with a suitable support which is intended in turn for fixing the electric modules.

Again alternatively, there may be provision for the electric module to be fixedly joined to the support frame 1 itself.

The cover 2 is further hinged to the support frame 1 about a hinging axis X so as to be able to rotate between a closed position illustrated in Figure 1A and an open position illustrated in Figure 1B.

Advantageously, in the closed position the cover 2 is arranged for protection of the electric module and an open position in which the electric module is instead accessible by a user or a maintenance operator.

In some embodiments, as in the exemplary embodiment illustrated in the Figures, in which the electric module is intended to be received in alignment with the through-hole 101 formed by the mount of the frame 1 itself, the cover 2 closes the through-opening 101, making it non-accessible, in the closed position, while it allows access thereto in the open position.

It may be observed that the cover may provide a central, transparent region in order to allow observation of the modules below when in the closed position.

The transparent region may further be made from flexible material, allowing any switches and push-buttons to be actuated even when the cover is closed.

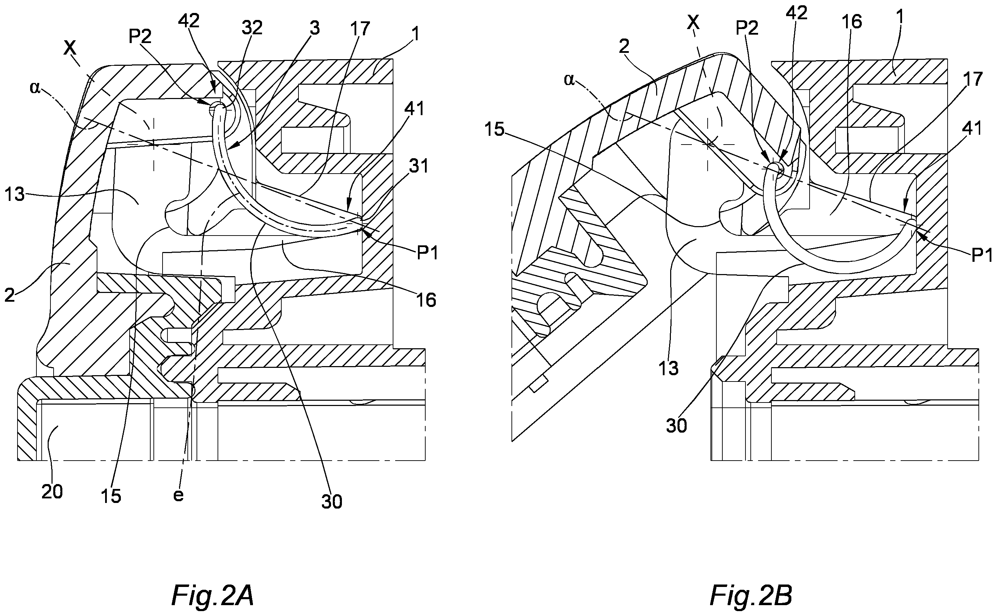

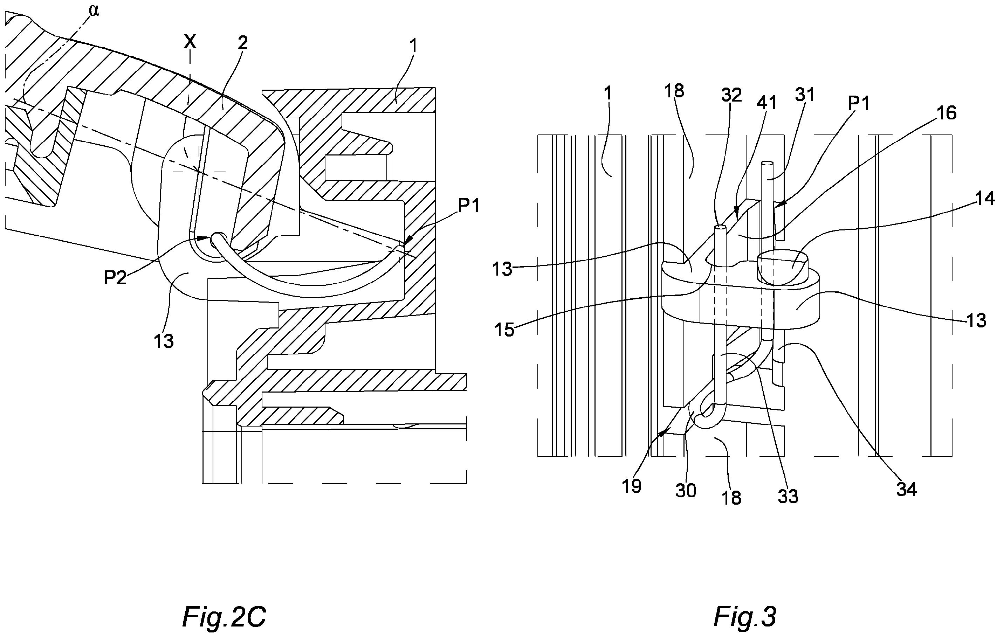

Now with reference to Figures 2A to 2C and Figure 3, the cover structure 100 further comprises a resilient element 3 which, as will be seen below in greater detail, acts on the cover 2 in order to urge it so as to close or open in accordance with the angular position taken up by the cover itself with respect to the frame 1.

As may be observed in Figure 3, in some embodiments, the resilient element 3 comprises a first abutment portion 31, a second abutment portion 32 and a deformable portion 30 which extends between the abutment portions 31, 32.

Preferably, the resilient element is filiform and the deformable portion 30, when the resilient element is in the neutral condition, is substantially C-shaped.

The resilient element 3 further includes two substantially parallel portions 33, 34 which can be seen, for example, in Figure 3 and which define the abutment portions 31, 32 which extend transversely to the deformable portion 30 with respect to a position plane of the "C".

As may be observed in Figures 2A, 2B and 2C, the abutment portions 31, 32 abut the support frame 1 and the cover 2 in alignment with respective seats 41, 42, respectively.

In this manner, by means of a resilient deformation of the resilient element 3, it is possible to urge the cover 2 with respect to the support frame 1.

In fact, the deformable portion 30 is deformed by modifying the form thereof as may be observed in Figures 2A, 2B and 2C.

In fact, as may be observed in the Figures, in preferred embodiments the "C" is closed by moving from the closed position of Figure 2A to the intermediate position of Figure 2B, and opens again when the intermediate position is passed until reaching the completely open position of Figure 2C.

It may be observed that the abutment portions 31, 32 together with the seats 41, 42 define, in a plane perpendicular to the hinging axis X, respective contact points P1, P2 of the resilient element 3 on the support frame 1 and on the cover 2.

The distance between the contact points P1, P2 varies in accordance with the angular position of the cover 2 with respect to the frame 1 about the hinging axis X.

At the same time, the total extent and the deformable portion 30 is greater than the distance between the contact points P1, P2. This extent is advantageously greater than the distance between the points in all the positions of the cover about the hinging axis X and in particular in the intermediate position and in the open and closed positions.

As may be observed still in Figures 2A, 2B, 2C, the contact points P1 and P2 are different with respect to the axis X or, in other words, they are arranged at respective non-zero distances from the hinging axis X.

However, it may be observed that, in the intermediate position, illustrated in Figure 2B, the contact points P1, P2 and the hinging axis X are aligned.

In this manner, in the intermediate position the cover is in a neutral condition while, when it approaches from this intermediate position to the closed position or the open position, it is urged so as to close or open, respectively.

It may further be observed that the position of the two contact points P1 and P2 is such that the contact point P2 between the resilient element 3 and the cover 2, when the cover 2 is arranged in an open position, is arranged at an opposite side with respect to a plane α passing through the contact point P1 and parallel with the axis X with respect to when the cover 2 is arranged in a closed position.

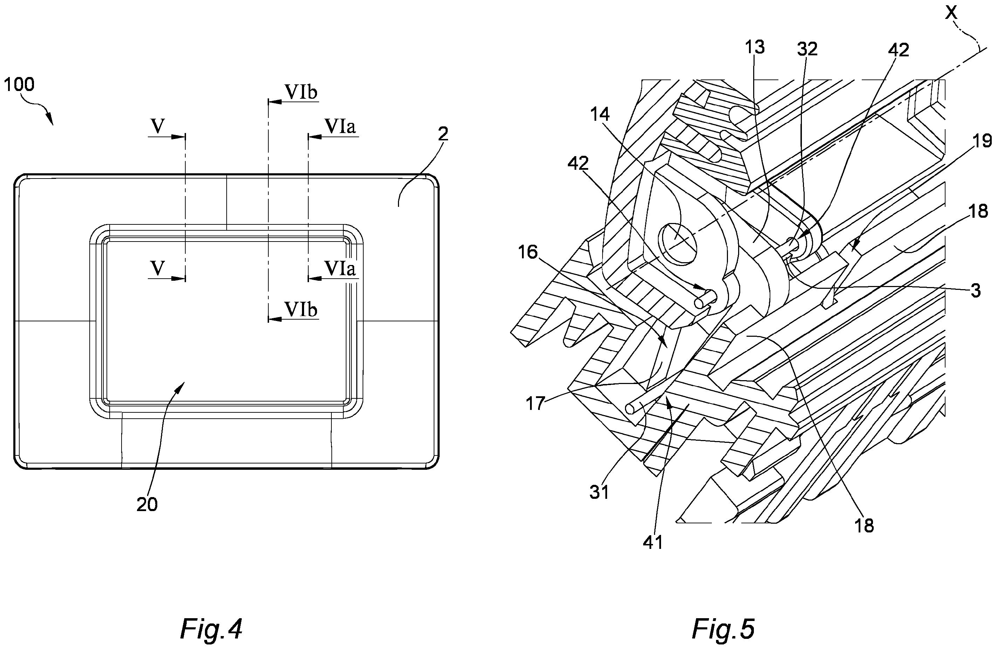

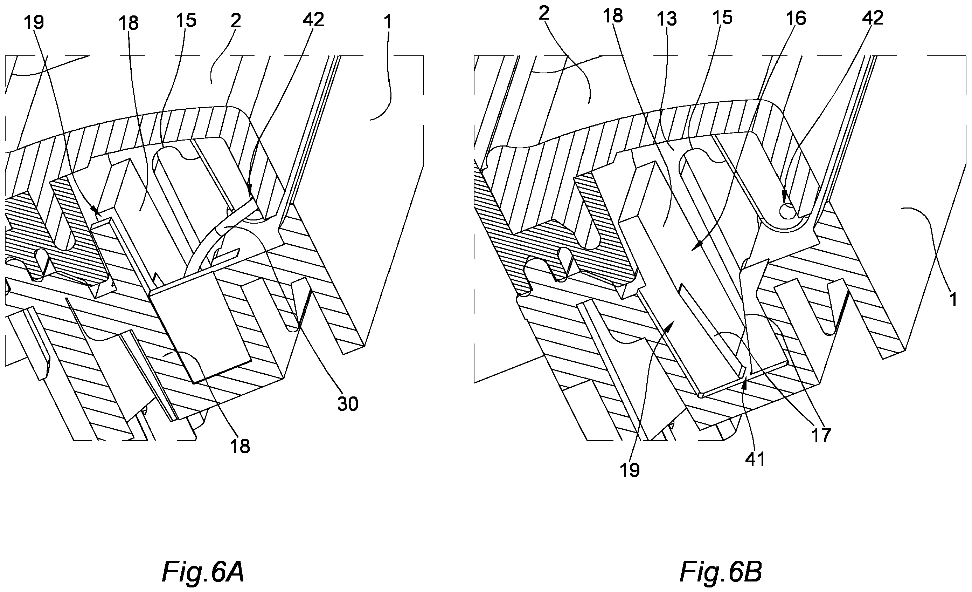

Now with reference to Figures 5, 6A and 6B, in preferred embodiments the resilient element 3 is secured to the frame 1 by means of the presence of a suitable peripheral recess 16.

As may be better observed in Figure 6A, the peripheral recess 16 preferably comprises one or more narrowed sections 17. The first abutment portion 31 is advantageously secured in the region of the base of the peripheral recess 16 by means of the narrowed sections 17.

The frame 1 may further comprise a peripheral wall 18 which develops about the through-hole defined by the mount. The peripheral recess 16 may therefore advantageously extend in a position adjacent to the peripheral wall 18.

As may be observed in Figure 6B, there may be defined in the peripheral wall a notch 19 which defines an interruption therein. The deformable portion 30 is partially received in the notch at least when the cover is in the open position. There is thereby defined a useful space for deforming the deformable portion 30.

The connection of the resilient element 3 to the cover 2 can be brought about by means of a form-fitting connection. To this end, there may be provision for the cover 2 to have one or more holes, inside which the second abutment portion 31 of the cover is inserted.

According to some embodiments, the frame 1 further comprises a bracket 13 which supports a rotation fulcrum 14 of the cover 2.

The bracket 13 advantageously develops in a direction away from the peripheral wall 18 of the frame and comprises a groove 15 inside which there is partially received the second abutment portion 31 of the cover 2 when the cover 2 is in an open position.

Therefore, the groove defines a travel limit end stop which prevents further rotation so as to open the cover 2 once it has reached the maximum opening position. For example, this position may correspond to a rotation of 100°.

In preferred embodiments, the bracket is L-shaped and the groove is between the two portions of the "L".

Advantageously, the groove has a rounded form so as to be adapted to the section of the resilient element, particularly if it has a filiform shape.

In some embodiments, the cover and the support frame are made of plastics material, preferably a material suitable for moulding.

The resilient element 30 may instead be made from metal material, preferably harmonic steel.

The invention thereby solves the problem proposed, at the same time achieving a number of advantages. In particular, there is provided a cover structure capable of being maintained in a stable manner both in the open position and in the closed position, while providing a structurally simple and robust solution.

## Claims

1. A cover structure (100) comprising:
- a support frame (1) for at least one electric module;
- a cover (2) hinged to the support frame (1) about a hinging axis (X) so as to be able to rotate between a closed position, in which the cover (2) is arranged so as to protect the electric module, and an open position, in which the electric module is accessible;
- a resilient element (3) comprising a first abutment portion (31) secured to the support frame (1), a second abutment portion (32) secured to the cover (2) and a deformable portion (30) extending between the abutment portions (31, 32), wherein the support frame (1) and the cover (2) comprise respective seats (41, 42), the abutment portions abutting and being secured to the support frame (1) and the cover (2), respectively, in correspondence of the seats (41, 42), the deformable portion (30), when the resilient element is in a neutral condition, being substantially C-shaped, the abutment portions (31, 32) extending transversely to the deformable portion (30) with respect to a position plane of the C-shape, and being defined by two substantially parallel portions (33, 34), the substantially parallel portions (33, 34) being substantially parallel with the hinging axis (X), wherein the abutment portions (31, 32) together with the seats (41, 42) define, in a respective plane perpendicular to the hinging axis (X) and passing through the respective seat to which each abutment portion is secured, respective contact points (P1, P2) of the resilient element (3) on the support frame (1) and on the cover (2), the contact points (P1, P2) being arranged at respective non-zero distances from the hinging axis (X), the distances being defined in the plane perpendicular to the hinging axis (X);
wherein the cover (2) is rotatable between the closed position and the open position by passing through an intermediate position in which the contact points and the hinging axis are aligned and the contact points are at a distance from each other less than a corresponding distance in the closed position and the open position, the resilient element (3) being secured to the cover (2) so that the deformable portion (30) is urged by means of flexion, varying the curvature of the "C" while the cover (2) is moved between the opening position and the closed position, the "C" becoming deformed into a more closed configuration when it moves from the closed position to the intermediate position, and becoming deformed into a configuration which is open again when the cover (2) passes the intermediate position and moves towards the open position.

2. A cover structure (100) according to the preceding claim, wherein the deformable portion (30) extends over a total extent (e) between the contact points, the total extent (e) being greater than the distance between the contact points in the intermediate position and in the open and closed positions.

3. A cover structure (100) according to the preceding claim, wherein the distance between the contact points is less than the total extent (e) in each position of the cover between the closed position and the open position.

4. A cover structure (100) according to any one of the preceding claims, wherein there is defined a reference plane (α) which passes through the contact point (P1) between the resilient element (3) and the frame (1) and through the hinging axis (X), the contact point (P2) between the resilient element (3) and the cover (2) when the cover (2) is arranged in an open position being arranged at an opposite side with respect to the reference plane with respect to when the cover (2) is arranged in a closed position.

5. A cover structure (100) according to any one of the preceding claims, wherein the cover and the support frame are made from plastics material, the resilient element being made from metal material, preferably harmonic steel.

6. A cover structure (100) according to any one of the preceding claims, wherein the frame (1) comprises a bracket (13) which supports a rotation fulcrum (14) of the cover (2).

7. A cover structure (100) according to the preceding claim, wherein the bracket develops in a direction away from the frame.

8. A cover structure (100) according to claim 6 or claim 7, wherein the bracket comprises a groove (15) inside which there is partially received the second abutment portion (31) of the cover (2) when the cover (2) is in an open position so as to act counter to a further opening rotation of the cover.

9. A cover structure (100) according to the preceding claim, wherein the bracket is L-shaped, the groove being between two successive portions of the "L"" and preferably being of rounded shape.

10. A cover structure (100) according to any one of the preceding claims, wherein the second abutment portion (32) is secured to the cover (2) by means of a form-fitting connection.

11. A cover structure (100) according to the preceding claim, wherein the second abutment portion (32) is secured to the cover (2) by means of a hole inside which the second abutment portion (32) is inserted.

12. A cover structure (100) according to any one of the preceding claims, wherein the frame comprises a peripheral recess (16) which comprises one or more narrowed sections (17), the first abutment portion (31) being secured in the region of a respective base of the peripheral recess by means of the narrowed section(s).

13. A cover structure (100) according to any one of the preceding claims, wherein the support frame (1) has a mount-like shape and comprises a peripheral wall (18) which develops about a through-opening which is defined by the mount, the peripheral recess extending in a position adjacent to the peripheral wall (18).

14. A cover structure (100) according to the preceding claim, wherein the peripheral wall comprises a notch (19) which defines an interruption in the peripheral wall, the notch being configured so that the deformable portion (30) is partially received in the notch at least in the open position of the cover (2).

15. A cover structure (100) according to claim 13 or 14 when dependent on claim 6, wherein the bracket develops from the peripheral wall (18).
